# DEMANDE DE BREVET EUROPEEN

(11) **EP 2 484 415 A1**
(43) Date de publication de la demande: **08.08.2012**
(21) Numéro de dépôt: 11305105.6
(22) Date de dépôt: 02.02.2011
(51) Int. Cl.: A63F 9/24, G03B 13/32, G03B 17/18, H04N 5/232, A63F 3/08, A63F 11/00

(54) **Procédé de transmission de données à une carte**

(71) Demandeur: Gemalto SA, 92190 Meudon (FR)
(72) Inventeur: Seheux, Fabien, 13600 La Ciotat (FR); Martinent, Jean-François, 13090 Aix en Provence (FR)

(57) **Abrégé**

L'invention propose un procédé de transmission de données à une carte 15, ce procédé consistant à :
- Diffuser un message vidéo chiffré par une clé symétrique sur des écrans 10, le message vidéo comprenant les données ;
- Lire le message à l'aide d'un lecteur optique portable 13 ;
- Transmettre le message à la carte 15 et déchiffrer le message dans la carte 15 pour récupérer les données.

L'invention s'applique notamment dans le domaine des cartes de jeu intelligentes.

## Description

Le domaine de l'invention est celui de la transmission de données à des cartes, par exemple à des cartes de jeu de société ou à des cartes de fidélité ou de paiement, à l'aide d'un réseau de diffusion hertzien analogique ou numérique (par exemple de type TNT pour Télévision Numérique Terrestre).

On connaît par la demande EP-1.788.509 un moyen de transmission de données codées par un écran d'ordinateur à un scanner. Cette demande décrit un procédé de génération d'un code d'authentification avec l'aide d'un code graphique et avec un scanner afin d'authentifier un utilisateur au niveau d'un réseau informatique. Un tel code peut notamment être utilisé pour effectuer des transactions bancaires.

Dans le cadre de la présente invention et dans le domaine des jeux de cartes, on se propose de transmettre à des cartes intelligentes, c'est-à-dire munies de puces, à contact ou sans contact, des informations par l'intermédiaire de la télévision publique (ou éventuellement payante) classique, diffusée par liaison hertzienne. Cette télévision publique peut également être du type TNT ou reçue par un ensemble modem/ordinateur/écran d'ordinateur, de type câblé, Wifi ou satellitaire.

Dans le domaine des jeux de cartes, plusieurs jeux de cartes (comme Yu-Gi-Oh!™, Boule de Dragon™ ou Wakfu™) implémentent des stratégies cross-média importantes : dessins animés, mangas, films, bandes dessinées, jeux de cartes, jeux vidéo.

Les éditeurs de ces jeux utilisent quelques techniques de base pour encourager les joueurs à regarder la télévision en fournissant pendant la diffusion d'une émission, par exemple un dessin animé, un code ou un renseignement qui peut être utilisé dans le jeu (principalement pour des jeux vidéo - en ligne ou autonomes). Ces éditeurs augmentent ainsi l'audience de l'émission, ce qui encourage les publicitaires à y participer et ancre plus profondément les joueurs dans l'univers des jeux. Ce code ou ce renseignement est relativement peu gourmand en terme de digits puisqu'il consiste en une simple indication d'un « truc » (« cheat code » en anglais) permettant par exemple d'échapper à un ennemi, de franchir un niveau de jeu ou de se constituer un stock d'armes supplémentaires.

Pour les jeux de cartes, il existe également un concept de jeux faisant appel à des cartes à puces : les joueurs placent leurs cartes à puces sur un lecteur (dans le cas de cartes sans contact) ou les insèrent une à une dans un lecteur (dans le cas de cartes à contact) et un écran permet de voir l'avancée du jeu. Les cartes possèdent un certain pouvoir (arme, défense, vitesse, ingéniosité,...) et l'ordre dans lequel les joueurs placent leurs cartes sur ou dans le lecteur détermine le déroulement du jeu. Ces jeux peuvent se jouer en ligne (par exemple via Internet) ou hors ligne (les joueurs sont présents autour de la table de jeu).

La présente invention propose d'établir une possibilité de connexion de ces deux mondes qui sont la fourniture de codes pendant la diffusion d'une émission télévisée et les jeux de cartes faisant appel à des cartes à puces.

L'invention a également pour but de permettre une discrimination entre les utilisateurs de ces cartes : certains utilisateurs doivent pouvoir recevoir une information alors que d'autres ne la recevront pas. Ceci permet par exemple de constituer des équipes ou de limiter dans le temps la valeur des cartes.

A cet effet, la présente invention propose un procédé de transmission de données à une carte, ce procédé consistant à :
- Diffuser un message vidéo chiffré par une clé symétrique sur des écrans, le message vidéo comprenant les données ;
- Lire le message à l'aide d'un lecteur optique portable ;
- Transmettre le message à la carte et déchiffrer le message dans la carte pour récupérer les données.

La carte peut être soit une carte de jeu, une carte de paiement ou une carte de fidélité.

Préférentiellement, l'écran est un écran de télévision ou de tout autre dispositif permettant de recevoir un programme télévisé.

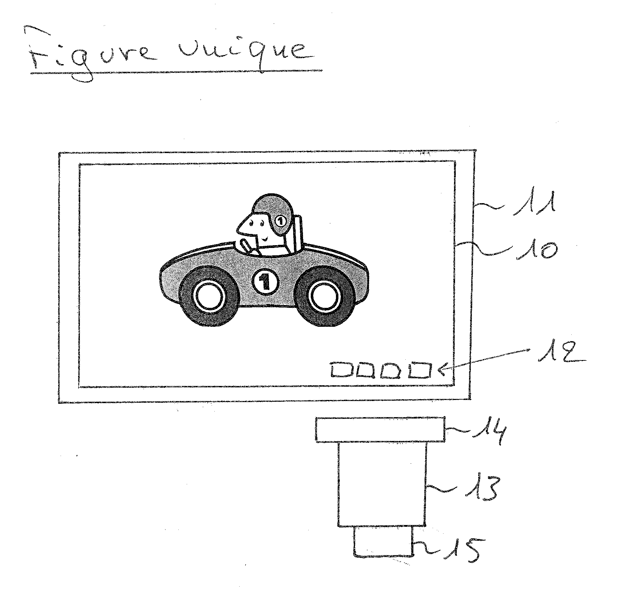

D'autres caractéristiques et avantages de l'invention apparaîtront à la lecture de la description suivante d'un mode de mise en oeuvre avantageux, donné à titre illustratif et non limitatif, et de la figure unique annexée qui représente un système mettant en oeuvre le procédé selon la présente invention.

Dans cette figure, un écran 10, tel que par exemple un écran de télévision 11 ou celui d'un ordinateur, est utilisé pour visualiser une émission, par exemple un dessin animé ou une publicité.

Pendant la diffusion de l'émission, un message vidéo chiffré transmis par la chaîne diffusant l'émission s'affiche sur l'écran 10. Ce message vidéo chiffré est par exemple affiché sur l'écran comme décrit dans la demande de brevet EP-1,788,509.

Une autre manière de procéder pour cet affichage consiste à prévoir un certain nombre de cellules, ici quatre carrés ou rectangles 12 tel que représenté sur la figure. Ces cellules changent de couleur, par exemple passent du noir au blanc et réciproquement en fonction du message à transmettre. Les cellules blanches correspondent par exemple à un bit à 0 alors que les cellules noires correspondent à un bit à 1. Un demi-octet de données peut ainsi être transmis à chaque instant. Pour un taux de rafraîchissement de 50 Hz de l'image transmise, 25 octets peuvent être ainsi être transmis par seconde.

Il est également possible d'afficher des codes QR successifs dans chaque cellule. Ceci permet d'augmenter le nombre de bits par seconde et donc le nombre d'informations transmises par unité de temps.

Les données transmises sont destinées à être lues par un lecteur optique portable 13. Le lecteur comporte une tête de lecture optique et communique avec une carte 15. Pour assurer la lecture des données affichées, l'utilisateur du lecteur 13 applique ce lecteur contre l'écran 10, à l'emplacement des cellules 12.

La carte 15 est ici une carte à puce à contact insérée dans une fente du lecteur 13 mais peut également être une carte sans contact communiquant par un autre moyen avec le lecteur 13.

Le message lu sur l'écran 10 est transmis du lecteur 13 à la carte 15 qui le déchiffre à l'aide de la clé symétrique qu'elle contient pour récupérer les données transmises. On assure ainsi une transmission par un canal télévisé de données à la carte 15.

Le lecteur 13 peut être un dispositif connu sous le nom d'Ezio Optical Reader, mis au point par le demandeur. Ce lecteur est prévu pour effectuer des transactions en ligne sécurisées. Le processus est pratiquement transparent pour le consommateur : il lui suffit de présenter le lecteur devant son écran (d'ordinateur) et les données requises pour l'authentification et la génération de la signature sont lues instantanément. De plus, aucune installation de logiciel n'est nécessaire, ce qui facilite son utilisation.

La carte 15 est, dans un premier mode de mise en oeuvre, une carte de jeu, telle que par exemple décrite dans EP-1.237.634 incorporé dans la présente demande par référence. Il est ainsi possible de modifier les données comprises dans la carte 15, par exemple pour augmenter la force de son personnage ou lui allouer des accessoires ou atouts supplémentaires (armes, vitesse, combativité dans le domaine des jeux de guerre ou alors véhicules supplémentaires pour des jeux de voiture).

L'intérêt de chiffrer le message à l'aide d'une clé symétrique est le suivant : il permet de sélectionner les cartes qui bénéficieront d'avantages (plus de force, de résistance, de véhicules,...) par rapport à d'autres cartes qui ne pourront pas déchiffrer le message chiffré car elles ne comportent pas la clé de chiffrement. L'exemple suivant permet de mieux comprendre ce principe : des cartes à puce sans contact sont utilisées dans un jeu de cartes commercialisables. Le thème du jeu est présenté dans différents médias (des dessins animés, des mangas, des jeux vidéo, des jeux en ligne, etc). Le but de la société éditant tous ces médias est de maximiser ses revenus et de permettre à ces joueurs de faire partie d'un univers de jeu spécifique. Cela permet de vendre des produits dérivés mais aussi d'attirer des publicitaires pour l'insertion de publicités pendant la diffusion de dessins animés.

Pendant la diffusion du dessin animé, les spectateurs sont informés qu'un message codé sera très bientôt diffusé sur l'écran. Ceux-ci préparent alors leurs lecteurs et au moment où les cellules 12 apparaissent, approchent leurs lecteurs de ces dernières pour récupérer le message transmis et le déchiffrer.

La carte 15 contient la clé permettant de déchiffrer le message car elle a été achetée pendant une période de temps donnée (par exemple dans les quinze derniers jours) ou qu'elle fait partie d'un lot (par exemple, pour le football, équipe verte). Dans cet exemple d'équipe, seuls les détenteurs de cartes de l'équipe verte pourront mettre à jour leurs cartes, celles d'une autre équipe, par exemple équipe rouge, ne contenant pas la clé de déchiffrement. La mise à jour des cartes de l'équipe rouge sera par contre possible pendant la diffusion d'un autre dessin animé ou plus tard pendant la diffusion du même dessin animé.

La carte de jeu 15 n'est pas nécessairement connectée physiquement au lecteur 13 et peut par exemple communiquer avec celui-ci via NFC. Elle comporte dans ce cas une pile ou batterie, ainsi qu'une antenne.

L'invention permet un transfert d'informations relativement important à chaque carte, ces informations pouvant ensuite être utilisées dans un jeu interactif, un jeu vidéo, un jeu de société,... tout en assurant que seuls les détenteurs de certaines cartes (celles contenant la clé de déchiffrement) pourront bénéficier des informations transmises.

Dans un deuxième mode de mise en oeuvre de l'invention, la carte 15 est une carte de paiement ou de fidélité. II est dès lors possible de charger des points de fidélité ou des réductions ciblées pour certains produits dans la carte. Par exemple, pendant la diffusion d'une publicité pour une lessive, il est possible d'inviter le téléspectateur d'approcher son lecteur et sa carte de l'écran du téléviseur pour qu'il bénéficie d'une réduction sur cette lessive lors de son prochain achat. II est ainsi possible de viser seuls les détenteurs de certaines cartes (provenant par exemple d'un distributeur donné, tel que Carrefour™ ou Auchan™ par exemple et/ou les détenteurs de la carte de paiement Accor™).

## Revendications

1. Procédé de transmission de données à une carte (15), **caractérisé en ce qu'**il consiste à :
- Diffuser un message vidéo chiffré par une clé symétrique sur des écrans (10), ledit message vidéo comprenant lesdites données ;
- Lire ledit message à l'aide d'un lecteur optique portable (13) ;
- Transmettre ledit message à ladite carte (15) et déchiffrer ledit message dans ladite carte (15) pour récupérer lesdites données.

2. Procédé selon la revendication 1, **caractérisé en ce que** ladite carte (15) est une carte de jeu.

3. Procédé selon la revendication 1, **caractérisé en ce que** ladite carte (15) est une carte de paiement.

4. Procédé selon l'une des revendications 1 à 3, **caractérisé en ce que** ladite carte (15) est une carte de fidélité.

5. Procédé selon l'une des revendications 1 à 4, **caractérisé en ce que** ledit écran (10) est un écran de télévision (11) ou de tout autre dispositif permettant de recevoir un programme télévisé.
